# EUROPÄISCHE PATENTSCHRIFT

(11) **EP 2 064 878 B1**
(45) Veröffentlichungstag und Bekanntmachung des Hinweises auf die Patenterteilung: **03.11.2010**
(21) Anmeldenummer: 07817507.2
(22) Anmeldetag: 11.09.2007
(51) Int. Cl.: H04N 5/235, H04N 5/238

(54) **BLENDENWERTERKENNUNG**
DIAPHRAGM VALUE RECOGNITION
DÉTECTION DES VALEURS DE DIAPHRAGME

(30) Priorität: 17.09.2006 DE 102006044309
(43) Veröffentlichungstag der Anmeldung: 03.06.2009
(73) Patentinhaber: Leica Camera AG, 35606 Solms (DE)
(72) Erfinder: KRANZ, Gerhard, 35576 Wetzlar (DE); ZIELBERG, Oliver, 35582 Wetzlar (DE); LIES, Ulrich, 35578 Wetzlar (DE); DENK, Robert, 35619 Braunfels (DE)
(74) Vertreter: Stamer, Harald
(86) Internationale Anmeldenummer: PCT/DE2007/001634
(87) Internationale Veröffentlichungsnummer: WO 2008/031420

(56) Entgegenhaltungen:
- JP-A- 2 287 225
- US-A- 4 890 166
- US-A- 5 189 519
- US-A- 5 815 746
- US-A1- 2005 074 232

## Beschreibung

Die Erfindung betrifft ein Verfahren zur Ermittlung der aktuell als Arbeitsblende manuell eingestellten Blendenöffnung von Objektiven an Digitalkameras mit Suchereinblick und interner Belichtungsmessung durch das Objektiv hindurch und eine zur Durchführung des Verfahrens geeignete Digitalkamera.

Bei digital aufgenommenen Bildern besteht die Möglichkeit, bestimmte Abbildungsfehler und Farbdrifts mit Hilfe einer geeigneten Software nachträglich zu korrigieren. Insbesondere bei Weitwinkelobjektiven werden die Bildecken aufgrund der Vignettierung dunkler gegenüber der Bildmitte dargestellt. Die Korrektur eines solchen Abbildungsfehlers setzt die Kenntnis der bei der Aufnahme benutzten Blendenöffnung (Arbeitsblende) voraus.

Oftmals weisen Digitalkameras mit Suchereinblick und auswechselbaren Objektiven jedoch keine elektrische oder mechanische Blendenschnittstelle zwischen Objektiv und Kamera auf, die den eingestellten Blendenwert zur Kameraelektronik übertragen könnte. Außerdem ist die Lage der Blende in den Objektiven unterschiedlich, wodurch Unterschiede zwischen dem eingestellten und effektiven Blendenwert entstehen. Weiterhin sind die Winkelschritte zur Blendeneinstellung unterschiedlich, bzw. nicht linear, so daß der evtl. übertragenen Stellgröße unterschiedliche effektive Blendenwerte zuzuordnen sind.

Die Kenntnis der eingestellten Arbeitsblende ist auch wichtig für die Bemessung der Intensität eines Meßblitzes und der Blitzintensität für Blitzaufnahmen.

Für eine geometrische Messung der Blendenöffnung ist es notwendig, ein optisches Meßelement in der Kamera im zentralen Strahlengang anzubringen, das eine Blickrichtung aus der Kamera heraus auf die Rückseite der Blende ermöglicht. Das optische Element müßte auf einem schwenkbaren Hebel angebracht werden, da es kurz vor der Bildbelichtung aus dem Strahlengang entfernt werden muß. Solche Anordnungen sind bei Belichtungsmeßanordnungen durch das Objektiv für Analog-Kameras bekannt.

Zur Bestimmung der Blendenöffnung könnte das Bild der Objektivblende auch von einem Spiegelelement auf dem Schwenkhebel durch eine nachgeordnete Optik auf eine lichtempfindliche Zeile abgebildet werden. Die lichtempfindliche Zeile und die Optik für die Messung des Blendendurchmessers könnten im Kameraboden angebracht sein. Die Anzahl der beleuchteten Zellen auf der lichtempfindlichen Zeile ist proportional dem Blendendurchmesser. Zur Berechnung des Blendenwertes kann die Bedingung einer symmetrischen Lichtverteilung auf der Zeile mit berücksichtigt werden.

Es ist jedoch auch denkbar, einen teildurchlässigen Spiegel auf dem Schwenkhebel vorzusehen und hinter diesem den Sensor für die Belichtungsmessung anzuordnen. Solche Anordnungen sind von analogen Spiegelreflexkameras bekannt und ermöglichen eine hohe Empfindlichkeit bei der Belichtungsmessung. Der mechanische Aufwand für die Schwenkspiegelkonstruktionen ist beträchtlich. Außerdem kann die Größe der abgebildeten Blendenöffnung vom aufzunehmenden Objekt abhängig sein, wenn dessen Strukturen sich mit der Blendenbegrenzung überlagern und eine kleinere Blende vortäuschen.

Aus US 4 890 166 A ist eine Belichtungssteuereinrichtung für Digitalkameras bekannt, bei der über einen außerhalb des Bildaufnahmestrahlenganges angeordneten Weißabgleichsensor die Helligkeit im Objektraum gemessen wird. Aufgrund des ermittelten Belichtungsmeßwertes werden die Blende und die Belichtungszeit von der Kamera automatisch eingestellt. Der durch die automatisch eingestellte Blende hindurchgehende Lichtfluß wird zusätzlich mit einem in die Kamera eingebauten CCD-Sensor gemessen. Wenn die Differenz der vom Weißabgleichsensor und der vom CCD-Sensor ermittelten Belichtungsmeßwerte einen bestimmten Wert überschreitet, stellt die Kamera automatisch eine neue Blende und eine neue Belichtungszeit ein, die dem intern gemessenen Belichtungsmeßwert entsprechen. Das System ist nicht in der Lage, den exakten Öffnungswert einer manuell eingestellten Blende zu ermitteln.

Der Erfindung lag daher die Aufgabe zugrunde, ein Verfahren und eine zur Durchführung des Verfahrens geeignete Digitalkamera anzugeben, die ohne aufwendige Mechanik und unabhängig von geometrischen Formfaktoren und der Lage der Arbeitsblende im Objektiv eine Bestimmung ihrer wirksamen Öffnung ermöglichen.

Diese Aufgabe wird bei einem Verfahren der eingangs genannten Art erfindungsgemäß durch eine weitere externe Belichtungsmessung am Objektiv vorbei und durch eine Ermittlung der Arbeitsblende aus der Differenz der beiden Belichtungsmeßwerte gelöst. Eine zur Durchführung des Verfahrens geeignete Digitalkamera weist im Gehäuse außerhalb des vom Objektiv abgedeckten Bereichs ein zusätzliches Fenster für einen weiteren Belichtungsmesser mit vorgeschalteter Abbildungsoptik auf. Ein Verfahren und eine Digitalkamera gemäß der Erfindung sind in den Anspruchen 1 und 9 definiert. Vorteilhafte Ausgestaltungen des Verfahrens und der Digitalkamera ergeben sich aus den Merkmalen der jeweiligen Unteransprüche.

Die Erfindung geht von der Erkenntnis aus, daß das übliche Belichtungsmeßsystem innerhalb der Kamera nicht in der Lage ist, ohne Zusatzinformationen den eingestellten Blendenwert zu ermitteln. Überraschenderweise hat sich herausgestellt, daß allein durch eine zweite Belichtungsmessung, die von Einflüssen der Arbeitsblende unabhängig ist, durch Vergleich mit dem Meßwert, der die Objekthelligkeit in Abhängigkeit von der eingestellten Arbeitsblende mißt, die Arbeitsblende mit hinreichender Genauigkeit ermittelt werden kann.

Mit dem erfindungsgemäßen Verfahren kann die Größe der jeweiligen Arbeitsblende korrekt ermittelt werden, wenn der auf das Objekt bezogene Akzeptanzwinkelbereich der beiden Belichtungsmesser absolut gleich ist oder wenn das Objekt absolut gleichmäßig ausgeleuchtet ist und keine deutlichen Helligkeitsunterschiede aufweist. Dieser Idealzustand tritt in der Praxis jedoch in der Regel nicht auf, so daß mit Fehlern bei der Ermittlung der Arbeitsblende zu rechnen ist, die aber bei Berücksichtigung der nachstehend genannten wesentlichen negativen Einflußgrößen minimiert werden können.

Belichtungsmesser unterschiedlicher Bauart weisen unterschiedliche Empfindlichkeiten in Abhängigkeit vom Auffangwinkel der Strahlung auf. Damit ist die Intensität des Ausgangssignals als Integral über den gesamten Akzeptanzwinkelbereich ebenfalls abhängig von der Bauart des Belichtungsmessers. Insbesondere starke, punktförmige Lichtquellen im Objekt können so bei Belichtungsmessern unterschiedlicher Bauart zu unterschiedlichen Meßergebnissen führen. Bei der Bauart und Anordnung des internen und externen Belichtungsmessers ist daher auf möglichst gleiche Auffangwinkelkurven zu achten.

Die optischen Achsen des internen und externen Belichtungsmessers haben einen Versatz zueinander. Abhängig von der Justage des externen Belichtungsmessers und abhängig von der Entfernung zum Objekt führt dieser Versatz zu einem Parallaxfehler des Meßergebnisses. Durch Ausrichtung der optischen Achse des externen Belichtungsmessers auf eine mittlere Aufnahme-Entfernung läßt sich der Parallaxfehler für die häufigsten Anwendungsbereiche minimieren. Durch Kopplung mit der Entfernungseinstellung am Objektiv kann auch ein automatischer Parallaxausgleich vorgesehen werden.

Durch Wechselobjektive oder Zoomobjektive ändert sich der auf das Objekt bezogene Akzeptanzbereich des internen Belichtungsmessers. Bei längerbrennweitigen Aufnahmeobjektiven wird er kleiner, bei kürzerbrennweitigen Aufnahmeobjektiven wird er größer. Demgegenüber bleibt der Akzeptanzbereich des externen Belichtungsmessers immer gleich. Durch eine verstellbare Optik vor dem externen Belichtungsmesser kann eine Anpassung an die Brennweite des Aufnahmeobjektivs erfolgen.

Die prinzipiell verbleibenden Meßfehler aufgrund der Eigenschaften der Belichtungsmesser können durch Referenzmessungen unter Standardbedingungen berücksichtigt werden. Grundsätzlich sind dazu zwei Messungen bei der größten und kleinsten Öffnung der Arbeitsblende ausreichend. Bei gleichförmig ausgeleuchtetem Objektfeld mit konstanter Leuchtdichte werden die Belichtungsmeßwerte des externen und des internen Belichtungsmessers aufgenommen. Wenn der externe Belichtungsmesser die gleiche Leuchtdichte sieht wie der interne Belichtungsmesser, bleibt sein Meßwert konstant. Der Meßwert des internen Belichtungsmessers ändert sich dagegen in Abhängigkeit von der eingestellten Blendenöffnung. Die Differenzen der beiden intern gemessenen Belichtungswerte zu dem externen Meßwert werden der Öffnung der größten und kleinsten Arbeitsblende zugeordnet und in einem Speicher der Digitalkamera abgelegt. Durch Interpolation der Differenz-Meßwerte können auch Zwischenwerte der Arbeitsblende errechnet werden.

Die in der praktischen Anwendung vom externen Belichtungsmesser gemessenen Lichtwerte weichen von dem bei der Referenzmessung verwendeten Lichtwert ab. Da sich im gleichen Verhältnis auch die intern gemessenen Belichtungsmeßwerte ändern, bleibt der Differenz-Meßwert aber gleich. Sollte das nicht der Fall sein, kann der extern gemessene Belichtungswert auf die Standardleuchtdichte normiert und der intern gemessene Meßwert mit dem Normierungsfaktor auf einen vergleichbaren Wert gebracht werden, so daß wieder auf die Referenzuwerte zurückgegriffen werden kann.

Bei der Interpolation auf Blendenzwischenwerte können tatsächlich bestehende geometrische Blendenfehler des Objektivs bei den unterschiedlichen Blendenstufen nicht berücksichtigt werden. Es ist daher vorteilhaft, die Messungen an einem Leuchtdichtestandard schrittweise, z.B. in Blendenhalbstufen durchzuführen und die Differenzen der Belichtungsmeßwerte in einer Tabelle abzulegen. Zu jedem der diskreten Differenzwerte kann dabei ein symmetrischer Differenz-Wertebereich definiert werden, der mit einem benachbarten Differenz-Wertebereich nicht überlappt und dem ein Blendenwert oder Blendenzwischenwert aus einer genormten Blendenreihe zugeordnet wird. Durch die Definition von Differenz-Wertebereichen können Toleranzen bei unterschiedlichen Wechselobjektiven ausgeglichen werden.

Es ist jedoch auch möglich, daß die den Blendenstufen zugeordneten Differenz-Wertebereich für bestimmte Objektiv-Typen nicht geeignet sind. Dann ist es zweckmäßig, z.B für die Typen Normal-, Tele- oder Weitwinkel-Objektive eigene Referenztabellen zu ermitteln und in einem Speicher der Digitalkamera abzulegen. Ebenso kann es zweckmäßig sein, die Objektive nach anderen Merkmalen, wie z.B. des Öffnungsbereichs, gruppenweise einzuteilen und für jede Objektivgruppe oder auch für jedes Objektiv eine separate Referenztabelle abzulegen.

Die Verwendung unterschiedlicher Referenztabellen ist beim Einsatz von Wechselobjektiven jedoch nur dann sinnvoll, wenn die Digitalkamera nach dem Einsetzen des Objektivs automatisch erkennen kann, um welchen Objektivtyp oder welche Objektivgruppe es sich handelt, oder wenn der Typ oder die Gruppe von Hand eingestellt werden können.

Beim Abgleich des externen und internen Belichtungsmessers zur Erstellung der Referenztabellen wird ein ausreichend großes Objektfeld gewählt, so daß beide Belichtungsmesser auf gleiche Objektleuchtdichten gerichtet sind. Bei realen Objekten sind durch unterschiedliche Meßwinkel die Objektleuchtdichten für die externe und die interne Belichtungsmessung unterschiedlich.

In einer bevorzugten Weiterbildung des erfindungsgemäßen Verfahrens kann eine Korrektur der vor der Bildaufnahme erfolgten Blendenwertermittlung durch Auswertung einer Helligkeitsverteilung in der tatsächlichen digitalen Bildaufnahme des Objekts durchgeführt werden. Dazu werden die Helligkeiten von Motivteilen im Bild miteinander verglichen, auf die der externe und der interne Belichtungsmesser real gerichtet sind. Der dem internen Belichtungsmesser zugeordnete Bildausschnitt ist bei allen Objektiven gleich. Der dem externen Belichtungsmesser zugeordnete Bildausschnitt ist dagegen abhängig von der Brennweite des Objektivs. Zu den jeweiligen Bildausschnitten werden die durchschnittlichen Helligkeiten berechnet und daraus nach Umrechnung in Lichtwerte ein Korrekturwert für den aus der Referenztabelle vor der Aufnahme entnommenen Differenzwert bestimmt. Dieser korrigierte Differenzwert wird dann mit dem passenden Differenz-Wertebereich in der Referenztabelle verglichen und daraus der zugehörige korrigierte Wert der Arbeitsblende entnommen.

Bei Unterteilung der den jeweiligen Belichtungsmessern zugeordneten Bildausschnitte in beliebig viele Teilbereiche ist auch eine Berücksichtigung unterschiedlicher Akzeptanzwinkelbereiche der beiden Belichtungsmesser möglich und damit auch die Berücksichtigung hoher Kontraste im zugeordneten Bildausschnitt, wie z.B. punktförmiger Lichtquellen. Bei Kenntnis der eingestellten Entfernung ist auf diese Weise auch die Berücksichtigung eines Parallaxeinflusses möglich.

Der erfindungsgemäß zusätzlich ermittelte externe Belichtungsmeßwert kann mit Vorteil auch zur Steuerung der Anzeigehelligkeit im Sucher der Digitalkamera verwendet werden.

Der vor der Bildaufnahme aus der Referenztabelle entnommene Wert der Arbeitsblende oder der durch Interpolation ermittelte Wert der Arbeitsblende werden vorzugsweise zur Steuerung der Intensität eines Meßblitzes oder Aufnahmeblitzes verwendet. Eine der Arbeitsblende angepaßte Blitz-Intensität vermeidet Fehlversuche mit zu geringer oder zu hoher Blitzintensität und wirkt sich damit günstig auf den Energieverbrauch der Kameraelektronik aus.

Der nach der Bildaufnahme ermittelte bzw. korrigierte Blendenwert ist auf jeden Fall genauer als der vor der Bildaufnahme berechnete Wert. Er wird daher mit Vorteil für die objektiv- oder blendenabhängige Korrektur von Bilddaten, wie z.B. der Vignettierung verwendet.

Eine von der eingestellten Arbeitsblende unabhängige zweite Belichtungsmessung kann grundsätzlich auch durch das Objektiv hindurch erfolgen. Dazu kann aber nur ein sehr schmales Lichtbündel entlang der optischen Achse des Objektivs verwendet werden. Um unabhängig von der eingestellten Blende zu sein, darf der Öffnungswinkel des Meßstrahlenbündels nicht viel größer als 1° sein. Die Größe des angemessenen Objektfeldes kann über eine Zwischenabbildung weitgehend frei bestimmt und der Größe des primären Meßbildes für die interne Belichtungsmessung angepaßt werden. Der Strahlengang könnte dem der Autofokussysteme bei Spiegelreflexkameras entsprechen.

Das Fotoelement für die von der Arbeitsblende abhängige Belichtungsmessung wäre geneigt auf einem Schwenkarm anzuordnen. Über eine teilverspiegelte Oberfläche des Fotoelements wird ein Teil des Lichts in Richtung Kameraboden gelenkt. Eine in einer konjugierten Bildebene angeordnete Feldlinse und ein z.B. kreisförmige Aperturblende bestimmen den Öffnungswinkel des Meßstrahlenbündels für die zweite Belichtungsmessung. Ein nachfolgendes optisches System bildet einen bestimmten Ausschnitts des Objekts auf ein zweites Fotoelement ab, das einen blendenunabhängigen Belichtungsmeßwert liefert und damit wie ein extern angeordneter Belichtungsmesser wirkt.

Ein solches System hätte den Vorteil einer parallaxfreien weiteren Belichtungsmessung und einer automatischen Anpassung des Meßfeldes bei einem Objektivwechsel. Nachteilig sind jedoch neben der aufwendigen Mechanik für den Schwenkarm auch die aufgrund des geringen Öffnungswinkels sehr geringen Fotoströme am zweiten Fotoelement.

Für die notwendige zweite Lichtmessung am Objekt, die ohne Einfluß der Arbeitsblende ist, wird daher zweckmäßigerweise ein zusätzlicher externer Belichtungsmesser in die Kamera integriert. Dieser externe Belichtungsmesser sollte sich am besten in der Deckkappe in der Nähe des Objektivs befinden. Er sollte immer nur denselben Objektbereich betrachten, von dem das Licht auf den internen Belichtungsmesser fällt. Dies ist jedoch nur dann ideal möglich, wenn der externe Belichtungsmesser einen Parallaxausgleich und eine variable Optik enthält. Eine variable Optik für den externen Belichtungsmesser ist deshalb vorteilhaft, weil die Größe des durch das Objektiv auf den internen Belichtungsmesser abgebildeten Objektbereichs von der Objektivbrennweite abhängig ist. Die Achsen der beiden Belichtungsmesser müssen sich im Zentrum des Objektbereichs treffen, aus dem der Lichtfluß auf den internen Belichtungsmesser projiziert wird, um einen Parallaxfehler auszugleichen. Bei der Anordnung des externen Belichtungsmessers ist auf jeden Fall darauf zu achten, daß der von ihm aufgenommene Lichtfluß keine Abschattung durch ein Objektivgehäuse erfährt.

Die Wirkung des Systems zur Bestimmung der Arbeitsblende wird bei Verwendung von optischen Filtern vor dem Objektiv eingeschränkt. Jedes Filter vor der Optik reduziert die Menge des einfallenden Lichts. Der interne Belichtungsmesser mißt das einfallende Licht unter Berücksichtigung des benutzten Filters, der externe Belichtungsmesser dagegen nicht. Dadurch vergrößert sich die Differenz der beiden Belichtungsmeßwerte, die für die Ermittlung der eingestellten Blende benutzt werden. Dies hat zur Folge, daß aus der Referenztabelle ein kleinerer Blendenwert entnommen wird als er für die Bildaufnahme tatsächlich verwendet wurde. Die Kompensation der dunkleren Bildecken würde dann mit einer falschen Vignettierungskurve des Objektivs durchgeführt werden. Die Tatsache, daß die Vignettierung bei kleineren Blendenwerten schwächer wird und deshalb die Bildeckenkorrektur geringer ausfällt, bedeutet für das Bildergebnis, daß die Bildecken nur geringfügig dunkler sind.

Die konstruktive Umsetzung für einen externen Belichtungsmesser mit automatischem Parallaxausgleich und variabler Optik ist mechanisch aufwendig und damit kostenintensiv. Aus Kostengründen können aber Kompromisse gemacht werden. In einer vereinfachten Bauform kann die Optik auf eine mittlere Enfernung und auf eine festgelegte Brennweite justiert werden. Das hätte für abweichende Objektentfernungen und Brennweiten einen Meßfehler zur Folge, der aber durch das bereits beschriebene Verfahren der selektiven Auswertung der Lichtwerte im aufgenommenen Bild korrigiert werden kann, wenn sich z.B. aufgrund einer falschen Blitzbeleuchtung eine nicht tragbare Verschlechterung der Bildqualität ergibt.

Eine variable Optik und ein mechanischer Parallaxausgleich vor dem externen Belichtungsmesser können auch entfallen, wenn die Sensorfläche des externen Belichtungsmessers aus einer ausreichend großen Anzahl von Einzelsensoren in Form eines Matrixsensors oder Zeilensensors gebildet wird. Bei bekannter Brennweite des eingesetzten Objektivs und der eingestellten Entfernung am Objektiv sind die Größe und Lage des zu berücksichtigenden Meßfeldes auf der Sensorfläche bekannt. Nur die dem Meßfeld zugeordneten Einzelsensoren werden zur Belichtungsmessung herangezogen.

Ausführungsbeispiele des erfindungsgemäßen Verfahrens und einer zur Durchführung des Verfahrens geeigneten externen Belichtungsmeßanordnung in der Digitalkamera sind in der Zeichnung schematisch dargestellt und werden nachfolgend beschrieben. Dabei zeigen
- Fig.1: eine Referenztabelle,
- Fig.2: Bildausschnitte für die interne und externe Belichtungsanalyse,
- Fig.3: den prinzipiellen Aufbau für eine interne und externe Belichtungsmessung und
- Fig.4: einen externen Belichtungsmesser als Matrixsensor.

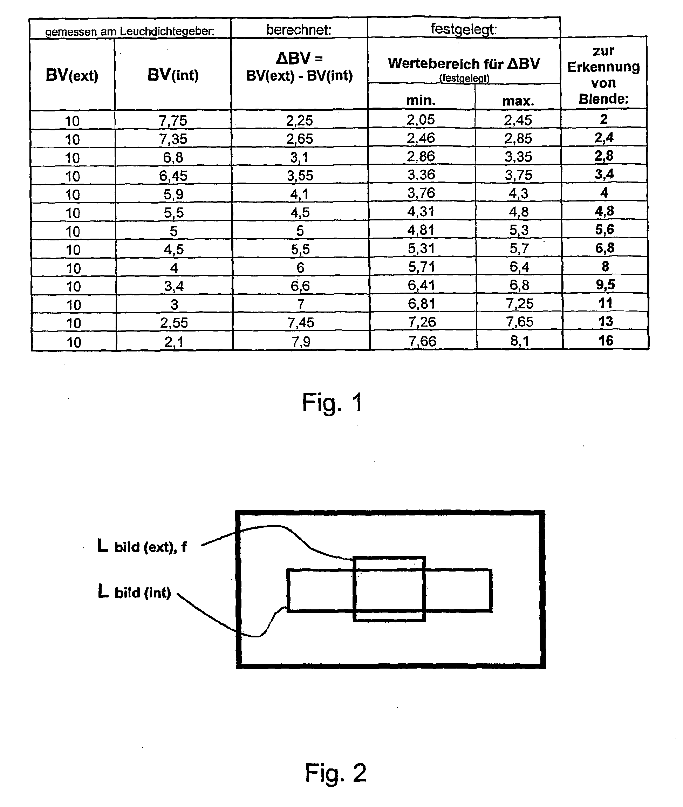

Fig.1 zeigt als Beispiel eine Referenztabelle. Vor einer Digitalkamera mit angeriegeltem Objektiv wird ein Leuchtdichtegeber mit ausreichend großem, gleichmäßig ausgeleuchtetem Leuchtfeld aufgestellt. Die Digitalkamera enthält einen internen und einen externen Belichtungsmesser, deren Anzeigewerte auf bestimmte Leuchtdichten abgeglichen sind. Wegen der Referenzmessung durch das Objektiv hindurch werden die Objektiv- und Blendenfehler sowie die Eigenschaften des internen und externen Belichtungsmessers automatisch mit berücksichtigt.

Die Referenzmessung wird z.B. bei einer Leuchtdichte durchgeführt, die bei Blende 5,6 einen Belichtungsmeßwert BV10 ergibt. Danach wird der vom externen Belichtungsmesser angezeigte Belichtungswert BV(ext) beim Abgleichwert BV10 konstant gehalten. Die Größe der Arbeitsblende wird schrittweise über den verfügbaren Einstellbereich verändert und der jeweilige Belichtungswert BV(int) aufgenommen. Daraus errechnen sich Differenzwerte ΔBV = BV(ext) - BV(int). Die Einzelschritte werden z.B. in Blendenhalbstufen einer genormten Blendenreihe durchgeführt.

Um die diskreten Differenzwerte ΔBV herum werden annähernd symmetrische Grenzwerte festgelegt, die einen Wertebereich für ΔBV definieren und zur Erkennung der eingestellten Arbeitsblende in den abgestuften Normwerten herangezogen werden. Die Wertebereiche sind so gewählt, daß sich keine Überlappung angrenzender Bereiche ergibt. Die ermittelte Referenztabelle wird in einem Speicher der Kameraelektronik abgelegt. Soweit die Digitalkamera über eine Objektiverkennung verfügt, kann für jedes Objektiv eine eigene Referenztabelle ermittelt und abgelegt werden.

Vor der individuellen Bildaufnahme ermittelt der externe Belichtungsmesser den Meßwert BV(ext), der z.B. auch zur Helligkeitssteuerung einer Sucheranzeige verwendet werden kann. Der interne Belichtungsmesser ermittelt den Meßwert BV(int). Der Differenzwert ΔBV = BV(ext) - BV(int) entspricht jetzt der aktuellen Bildsituation in Bezug auf Objektiv, Blende und Motiv. Dieser individuelle Differenzwert ΔBV wird dem passenden Differenz-Wertebereich ΔBV(min-max) zugeordnet und daraus der zugehörige Wert der Arbeitsblende entnommen. Wird z.B. für BV(ext) ein Wert 9,65 und für BV(int) ein Wert 6,9 gemessen, so ergibt sich ein ΔBV = 2,75 und als zugehöriger Blendenwert 2,4. Dieser vor der eigentlichen Bildaufnahme ermittelte Wert der Arbeitsblende kann z.B. für die Festlegung der Meßblitz-lntensität (Leitzahl des Meßblitzes) verwendet werden.

Beim Abgleich für die Referenztabelle sehen der externe und der interne Belichtungsmesser gleiche Objektleuchtdichten. Bei realen Motiven sind durch unterschiedliche Meßwinkel die gemessenen Objektleuchtdichten des externen und des internen Belichtungsmessers unterschiedlich. Es hat sich dabei als sinnvoll herausgestellt, den vor der Aufnahme ermittelten Blendenwert durch Auswertung der Helligkeitsverteilungen in der tatsächlichen digitalen Bildaufnahme zu korrigieren.

Dazu kann eine Durchschnittsberechnung der Helligkeit des Bildausschnittes durchgeführt werden, den der interne Belichtungsmesser sieht. Dieser Bildausschnitt ist für alle Objektive gleich und ergibt einen Lichtwert Lbild(int). Ebenso kann eine Durchschnittsberechnung der Helligkeit des Bildausschnittes durchgeführt werden, den der externe Belichtungsmesser sieht. Dieser Bildausschnitt ist für jede Objektivbrennweite anders und ergibt daher einen Lichtwert Lbild(ext),f. Aus den beiden Lichtwerten kann ein Korrekturwert KORRABV aufgrund des an sich bekannten Zusammenhanges KORRABV = (log (Lbild(ext),f / Lbild(int)) / log2 als korrespondierender Belichtungsmeßwert errechnet werden. Anstelle der Berechnung der durchschnittlichen Helligkeiten innerhalb des gesamten Bildausschnittes können die Bildausschnitte auch in Segmente zur individuellen Helligkeitsauswertung aufgeteilt werden. Damit können z.B. die Wirkungen besonders intensiver Punktlichtquellen im Objektfeld individuell berücksichtigt werden.

Der korrigierte Differenzwert ΔBV(KORR) = ΔBV - KORRΔBV ist dann wiederum dem entsprechenden Differenz-Wertebereich ΔBV(min-max) zuzuordnen und der dazu gehörige Blendenwert zu entnehmen. Wenn sich z.B. für die Helligkeit des Bildausschnittes Lbild(int) ein Wert 3.651 und für die Helligkeit des Bildausschnittes Lbild(ext),f ein Wert 3.042 ergibt, dann ist KORRΔBV = -0,21 und ΔBV(KORR) ergibt sich bei dem oben bereits verwendeten Beispiel zu ΔBV(KORR)= 2,75 - (-0,26) = 3,01. Aus dem für diesen Differenzwert geltenden Differenz-Wertebereich ergibt sich als korrigierter Wert eine Arbeitsblende 2,8.

Der nach der Aufnahme ermittelte, bzw. korrigierte Blendenwert ist damit genauer als der vor der Aufnahme ermittelte Blendenwert und kann daher bevorzugt für die objektiv- und blendenabhängige Korrektur der Bilddaten, z.B. der Vignettierung verwendet werden.

Fig.2 zeigt ein Beispiel für die unterschiedlichen Bildausschnitte, die von dem internen und externen Belichtungsmesser gesehen werden. Tatsächlich fallen die Empfindlichkeitsverteilungen des internen und externen Belichtungsmessers zu den Rändern hin ab, so daß für eine genauere Gewichtung der Lichtwerte der Bildpunkte auch ovale oder kreisförmige Bildausschnitte gewählt werden können.

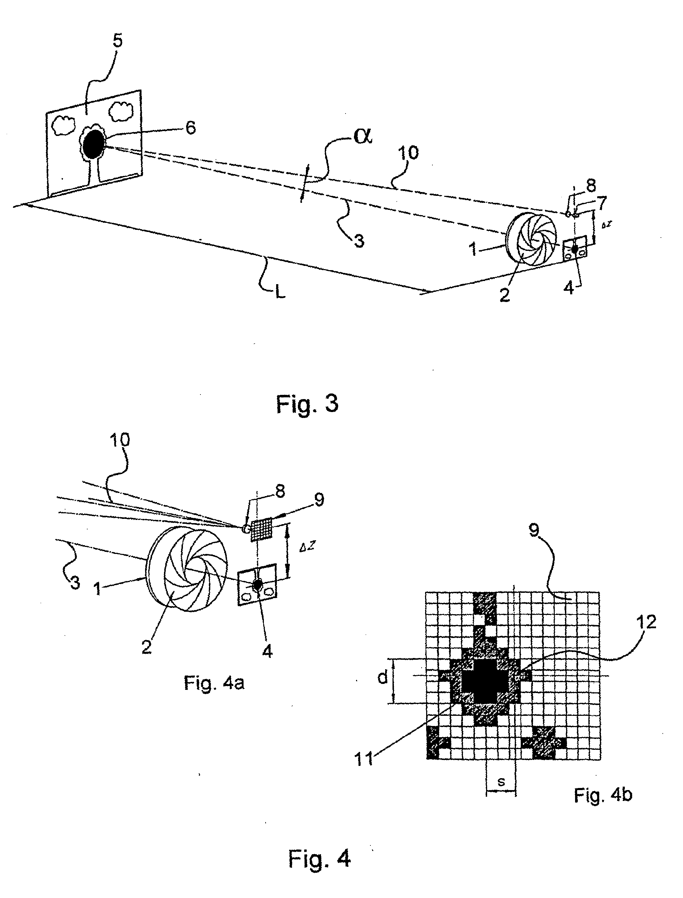

Fig.3 zeigt den prinzipiellen Aufbau für eine interne und externe Belichtungsanalyse. An ein nicht weiter dargestelltes Gehäuse einer Digitalkamera ist ein Objektiv 1 mit einer Blende 2 angesetzt. Auf der optischen Achse 3 des Objektivs 1 befindet sich im Innern der Kamera ein Meßfleck 4 für die interne Belichtungsmessung. Der Meßfleck 4 kann z.B. auf dem Verschlußvorhang der Kamera angeordnet sein und die Meßstrahlung auf einen im Kameraboden angeordneten Belichtungsmesser reflektieren. Solche Anordnungen sind bekannt.

Mit dem Objektiv 1 soll ein Objekt 5 aufgenommen werden, das sich in einer Entfernung L befindet. Der für die interne Belichtungsmessung wirksame Objektbereich 6 entspricht in der Größe dem durch das Objektiv 1 in der Entfernung L projizierten Meßfleck 4.

In der Deckkappe der nicht weiter dargestellten Digitalkamera ist hinter einem Fenster ein externer Belichtungsmesser 7 angeordnet. Dem Belichtungsmesser 7 ist eine Optik 8 vorgeschaltet, deren Aufnahmewinkel durch den Tubus des Objektivs 1 nicht abgeschattet wird. In einer einfacheren Ausführung kann der Belichtungsmesser 7 aus einem fotoelektrischen Empfänger mit einer rohrförmigen Lichtzuführung bestehen.

Der externe Belichtungsmesser 7 ist im Abstand Δz zu dem Meßfleck 4 des internen Belichtungsmessers angeordnet. Die optische Achse 10 der Optik 8, bzw. die Rohrachse einer Lichtzuführung, sind unter einem Winkel α zur optischen Achse 3 des Objektivs 1 so ausgerichtet, daß sie sich in der Entfernung L mit dem Zentrum des Objektbereichs 6 schneiden. Für diesen Fall ist ein Parallaxfehler bei der Messung ausgeschlossen. Wenn die Optik 8 dieselbe Brennweite wie das Objektiv 1 besitzt, sieht der externe Belichtungsmesser denselben Objektbereich 6 für seine Messung.

Fig.4 zeigt in vergrößertem Maßstab die Anordnung des internen und externen Belichtungsmessers, wobei der externe Belichtungsmesser als Matrixsensor 9 ausgebildet ist. Die optische Achse 10 der Optik 8 ist im wesentlichen parallel zur optischen Achse 3 des Objektivs 1 ausgerichtet. Die Lage und die Größe des für die externe Belichtungsmessung abgebildeten Objektbereichs 6 verschieben sich auf dem Matrixsensor 9 in Abhängigkeit von dem eingestellten Objektabstand und bei Anpassung an die Brennweite des Objektivs 1. Bei bekannter Brennweite des Objektivs 1 kann die Größe d des für die externe Belichtungsmessung geltenden Senorbereichts 11 durch eine Auswerteelektronik bestimmt werden. Die Verschiebung s des Schwerpunktes des Sensorbereichs 11 vom Zentrum 12 des Matrixsensors 9 ist von der Entferungseinstellung des Objektivs 1 abhängig, Diese kann durch geeignete Sensoren ermittelt und dann von einer Auswerteelektronik berücksichtigt werden.

Vorteilhaft für das System nach Fig.4 ist, daß kein mechanischer Parallaxausgleich erforderlich ist und kein Kompromiß für eine mittlere Entfernungseinstellung gewählt werden muß. Der Justageaufwand ist gering, da die Bezugsparameter des Matrixsensors durch Kalibration festgelegt werden können. Nachteilig ist, daß bei langbrennweitigen Objektiven der Sensorbereich 11 für die Auswertung klein und damit der Meßstrom gering ist.

### Bezugszeichenliste

- 1: Objektiv
- 2: Blende
- 3: optische Achse des Objektivs
- 4: Meßfleck
- 5: Objekt
- 6: Objektbereich
- 7: externer Belichtungsmesser
- 8: Optik
- 9: Matrixsensor
- 10: optische Achse der Optik
- 11: Sensorbereich
- 12: Zentrum des Matrixsensors

## Patentansprüche

1. Verfahren zur Ermittlung der aktuell als Arbeitsblende manuell eingestellten Blendenöffnung von Objektiven an Digitalkameras mit Suchereinblick und interner Belichtungsmessung durch das Objektiv hindurch, **dadurch gekennzeichnet, daß** eine weitere externe Belichtungsmessung am Objektiv (1) vorbei durchgeführt und aus der Differenz ΔBV der beiden Belichtungsmeßwerte BV(int) und BV(ext) der Wert der Arbeitsblende aus einer in der Digitalkamera abgelegten Referenztabelle ermittelt wird.

2. Verfahren nach Anspruch 1, **dadurch gekennzeichnet, daß** die Referenztabelle zu einem konstanten, extern gemessenen Belichtungswert bei schrittweise veränderter Arbeitsblende die jeweiligen Differenzen ΔBV der Belichtungsmeßwerte enthält,
wobei zu jedem diskreten Differenzwert ein Differenz-Wertebereich ΔBV(min-max) definiert wird, der mit dem benachbarten Differenz-Wertebereich nicht überlappt und
jedem Differenz-Wertebereich ΔBV(min-max) ein Blendenwert aus einer genormten Blendenreihe zugeordnet ist.

3. Verfahren nach Anspruch 2, **dadurch gekennzeichnet, daß** für eine Gruppe von Objektiven eine gemeinsame Referenztabelle erstellt und in der Digitalkamera abgelegt wird.

4. Verfahren nach Anspruch 2, **dadurch gekennzeichnet, daß** für jeden Objektivtyp eine separate Referenztabelle erstellt und in der Digitalkamera abgelegt wird.

5. Verfahren nach Anspruch 1, **dadurch gekennzeichnet, daß** zusätzlich die Lichtwerte Lbild(int), Lbild(ext),f in einem dem Sichtfeld der internen und externen Belichtungsmessung zugeordneten Ausschnitt im digital aufgenommenen Bild ermittelt und zur Korrektur der Differenz der Belichtungsmeßwerte ΔBV(KORR) und damit der Ermittlung eines korrigierten Wertes der Arbeitsblende eingesetzt werden.

6. Verfahren nach Anspruch 1, **dadurch gekennzeichnet, daß** der ermittelte Wert der externen Belichtungsmessung BV(ext) zur Steuerung der Helligkeit von LED-Sucheranzeigen eingesetzt wird.

7. Verfahren nach Anspruch 1, **dadurch gekennzeichnet, daß** der ermittelte Wert der Arbeitsblende zur Steuerung einer Blitz-Intensität eingesetzt wird.

8. Verfahren nach Anspruch 5, **dadurch gekennzeichnet, daß** der korrigierte Wert der Arbeitsblende zur Korrektur von Bilddaten eingesetzt wird.

9. Digitalkamera mit Suchereinblick, interner Belichtungsmessung durch das Objektiv hindurch und manuell einstellbarer Arbeitsblende, **dadurch gekennzeichnet, dass** zur Ermittlung der aktuell als Arbeitsblende eingestellten Blendenöffnung das Gehäuse der Digitalkamera außerhalb des vom Objektivtubus abgedeckten Bereichs ein zusätzliches Fenster für einen weiteren auf das Objekt gerichteten Belichtungsmesser (7, 9) mit vorgeschalteter Optik (8) zur Begrenzung des Aufnahmewinkels aufweist und eine Zuordnungseinheit enthält, die zu der Differenz ΔBV der beiden Belichtungsmesswerte einen in einer Referenztabelle gespeicherten Wert der Arbeitsblende entnimmt.

10. Digitalkamera nach Anspruch 9, **dadurch gekennzeichnet, daß** die Optik (8) als Zoom-System zur Anpassung an unterschiedliche Objektivbrennweiten ausgebildet und die Richtung ihrer optischen Achse (10) zum Parallaxenausgleich in Abhängigkeit von der Entfernungseinstellung des Objektivs (1) veränderbar ist.

11. Digitalkamera nach Anspruch 9, **dadurch gekennzeichnet, daß** die optische Achse (10) der Optik (8) nahezu parallel zur optischen Achse (3) des Objektivs (1) ausgerichtet ist.

12. Digitalkamera nach Anspruch 9, **dadurch gekennzeichnet, daß** die optische Achse (10) der Optik (8) zum Schnitt mit der optischen Achse (3) des Objektivs (1) bei einer mittleren Entfernung ausgerichtet ist und die Brennweite der Optik (8) einer mittleren Objektivbrennweite entspricht.

## Claims

1. Method for determining the aperture opening, currently adjusted manually as operating aperture, of objectives in digital cameras having a viewfinder eyepiece and internal exposure measurement through the objective, **characterized in that** a further external exposure measurement is carried out past the objective (1) and the value of the operating aperture is determined from a reference table stored in the digital camera from the difference ΔBV between the two measured exposure values BV(int) and BV(ext).

2. Method according to Claim 1, **characterized in that** the reference table referring to a constant, externally measured exposure value contains the respective differences ΔBV of the measured exposure values given an operating aperture varied in stepwise fashion, there being defined relative to each discrete difference value a difference value range ΔBV(min-max) which does not overlap the neighbouring difference value range, and each difference value range ΔBV(min-max) being assigned an aperture value from a normalized aperture range.

3. Method according to Claim 2, **characterized in that** a common reference table is compiled for a group of objectives and stored in the digital camera.

4. Method according to Claim 2, **characterized in that** a separate reference table is compiled for each objective type and stored in the digital camera.

5. Method according to Claim 1, **characterized in that** in addition the light values Lbild(int), Lbild(ext),f in a section, assigned to the inner view of the internal and external exposure measurement, of the digitally recorded image are determined and are used to correct the difference between the measured exposure values ΔBV(KORR), and thus to determine a corrected value of the operating aperture.

6. Method according to Claim 1, **characterized in that** the determined value of the external exposure measurement BV(ext) is used to control the brightness of LED viewfinder displays.

7. Method according to Claim 1, **characterized in that** the determined value of the operating aperture is used to control a flash intensity.

8. Method according to Claim 5, **characterized in that** the corrected value of the operating aperture is used to correct image data.

9. Digital camera having a viewfinder eyepiece, internal exposure measurement through the objective and a manually adjustable operating aperture, **characterized in that** in order to determine the aperture opening currently adjusted as operating aperture, outside the region covered by the objective tube the digital camera housing includes an additional window for a further exposure meter (7, 9), directed onto the object and having an upstream optics (8) for restricting the recording angle, and an assignment unit which selects a value of the operating aperture which is stored in a reference table with reference to the difference ΔBV between the two measured exposure values.

10. Digital camera according to Claim 9, **characterized in that** the optics (8) is designed as a zoom system for adapting the different objective focal length, and the direction of its optical axis (10) can be varied as a function of the range setting of the objective (1) for the purpose of parallax compensation.

11. Digital camera according to Claim 9, **characterized in that** the optical axis (10) of the optics (8) is aligned virtually parallel to the optical axis (3) of the objective (1).

12. Digital camera according to Claim 9, **characterized in that** the optical axis (10) of the optics (8) is aligned to cut the optical axis (3) of the objective (1) at a medium range, and the focal length of the optics (8) corresponds to a medium objective focal length.

## Revendications

1. Procédé pour déterminer l'ouverture de diaphragme actuellement réglée comme diaphragme de travail des objectifs sur des appareils photo numériques avec visée réflex et mesure interne de l'éclairage à travers l'objectif, **caractérisé en ce qu'**une mesure d'éclairage externe supplémentaire est effectuée le long de l'objectif (1) et la valeur du diaphragme de travail est déterminée dans un tableau de référence mémorisé dans l'appareil photo numérique à partir de la différence ΔBV entre les deux valeurs mesurées de l'éclairage BV(int) et BV(ext).

2. Procédé selon la revendication 1, **caractérisé en ce que**
le tableau de référence contient les différences ΔBV respectives entre les valeurs mesurées de l'éclairage pour une valeur d'éclairage constante mesurée à l'extérieur avec une modification par palier du diaphragme de travail,
une plage de valeurs de différence ΔBV(min-max) étant définie pour chaque valeur de différence discrète, laquelle ne chevauche pas la plage de valeurs de différence voisine et
une valeur de diaphragme issue d'une série de diaphragmes normalisés étant associée à chaque plage de valeurs de différence ΔBV(min-max).

3. Procédé selon la revendication 2, **caractérisé en ce qu'**un tableau de référence commun est créé pour un groupe d'objectifs et mémorisé dans l'appareil photo numérique.

4. Procédé selon la revendication 2, **caractérisé en ce qu'**un tableau de référence séparé est créé pour chaque type d'objectif et mémorisé dans l'appareil photo numérique.

5. Procédé selon la revendication 1, **caractérisé en ce que** les indices de lumination Lbild(int), Lbild(ext) sont en plus déterminés dans une portion de la photo enregistrée numériquement associée à la mesure interne et externe de l'éclairage et sont utilisés en plus pour corriger la différence entre les valeurs mesurées de l'éclairage ΔBV(KORR) et ainsi la détermination d'une valeur corrigée du diaphragme de travail.

6. Procédé selon la revendication 1, **caractérisé en ce que** la valeur déterminée de la mesure externe de l'éclairage BV(ext) est utilisée pour commander la luminosité d'indicateurs de viseur à LED.

7. Procédé selon la revendication 1, **caractérisé en ce que** la valeur déterminée du diaphragme de travail est utilisé pour commander une intensité de flash.

8. Procédé selon la revendication 5, **caractérisé en ce que** la valeur corrigée du diaphragme de travail est utilisée pour corriger les données d'image.

9. Appareil photo numérique avec visée réflex, mesure interne de l'éclairage à travers l'objectif et diaphragme de travail à réglage manuel, **caractérisé en ce que** pour déterminer l'ouverture de diaphragme actuellement réglée comme diaphragme de travail, le boîtier de l'appareil photo présente en dehors de la zone recouverte par le tube de l'objectif une fenêtre supplémentaire pour un dispositif de mesure d'éclairage (7, 9) supplémentaire dirigé sur l'objet devant lequel est montée une optique (8) pour limiter l'angle d'enregistrement et contient une unité d'association qui, pour calculer la différence ΔBV entre les deux valeurs mesurées de l'éclairage, prélève une valeur du diaphragme de travail mémorisée dans un tableau de référence.

10. Appareil photo numérique selon la revendication 9, **caractérisé en ce que** l'optique (8) est réalisée sous la forme d'un système à zoom pour l'adaptation à différentes focales d'objectif et la direction de son axe optique (10) est modifiable pour l'adaptation de la parallaxe en fonction du réglage de la distance sur l'objectif (1).

11. Appareil photo numérique selon la revendication 9, **caractérisé en ce que** l'axe optique (10) de l'optique (8) est aligné quasi-parallèlement à l'axe optique (3) de l'objectif (1).

12. Appareil photo numérique selon la revendication 9, **caractérisé en ce que** l'axe optique (10) de l'optique (8) est aligné par rapport à l'intersection avec l'axe optique (3) de l'objectif (1) pour une distance moyenne et la focale de l'optique (8) correspond à une focale moyenne de l'objectif.
